(19) Europäisches Patentamt
European Patent Office
Office européen des brevets

(11) Veröffentlichungsnummer: **0 096 659**
**B1**

(12) # EUROPÄISCHE PATENTSCHRIFT

(45) Veröffentlichungstag der Patentschrift: **01.04.87**

(51) Int. Cl.⁴: **C 09 B 62/04,** D 06 P 3/66, D 06 P 3/10

(21) Anmeldenummer: **83810234.1**

(22) Anmeldetag: **03.06.83**

(54) **Verfahren zum Färben oder Bedrucken von textilen Fasermaterialien mit Reaktivfarbstoffen.**

(30) Priorität: **09.06.82 CH 3557/82**

(43) Veröffentlichungstag der Anmeldung: **21.12.83 Patentblatt 83/51**

(45) Bekanntmachung des Hinweises auf die Patenterteilung: **01.04.87 Patentblatt 87/14**

(84) Benannte Vertragsstaaten: **CH DE FR GB IT LI**

(56) Entgegenhaltungen:
**EP - A - 0 022 209**
**DE - B - 1 146 064**
**FR - A - 2 330 739**

(73) Patentinhaber: **CIBA-GEIGY AG, Klybeckstrasse 141, CH-4002 Basel (CH)**

(72) Erfinder: **Scheibli, Peter, Dr., Nussbaumweg 3, CH-4103 Bottmingen (CH)**

**EP 0 096 659 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung liegt auf dem technischen Gebiet der Anwendung von Reaktivfarbstoffen zum Färben oder Bedrucken von textilen Fasermaterialien.

Reaktivfarbstoffe werden seit langem in grossem Umfang für das Färben und Bedrucken von Textilien aus Fasermaterialien eingesetzt. Angesichts der steigenden Anforderungen an Reaktivfärbungen in bezug auf Wirtschaftlichkeit, Applikationstechnik und Echtheitsniveau ist der erreichte technische Stand aber vielfach nicht voll befriedigend.

Der vorliegenden Erfindung lag die Aufgabe zugrunde, ein neues, verbessertes Verfahren zum Färben oder Bedrucken von textilen Fasermaterialien mit Reaktivfarbstoffen zu finden, das zu echten Färbungen und Drucken führt.

Mit der vorliegenden Erfindung wird ein neues Verfahren vorgestellt, das die gestellten Anforderungen erfüllt.

Das Verfahren ist dadurch gekennzeichnet, dass man Reaktivfarbstoffe der Formel

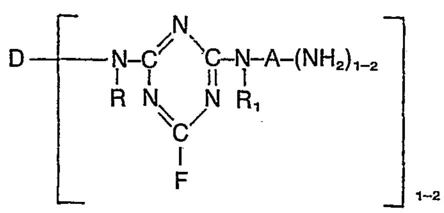 (1),

worin D der Rest eines sulfogruppenhaltigen organischen Farbstoffes, R und $R_1$ unabhängig voneinander Wasserstoff oder gegebenenfalls substituiertes $C_{1-4}$-Alkyl, und A ein gegebenenfalls substituierter aliphatischer oder aromatischer Rest ist, verwendet, und die Farbstoffe in Gegenwart eines alkalischen, säurebindenden Mittels auf den Fasermaterialien fixiert.

Der Rest D ist insbesondere der Rest eines sulfogruppenhaltigen organischen Farbstoffes der Mono- oder Polyazo-, Metallkomplexazo-, Anthrachinon-, Phthalocyanin-, Formazan-, Azomethin-, Dioxazin-, Phenazin-, Stilben-,Triphenylmethan-, Xanthen-, Thioxanthon-, Nitroaryl-, Naphthochinon-, Pyrenchinon- oder Perylentetracarbonimid-Reihe.

Der Rest D in Formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Äthyl, Propyl, Isopropyl und Butyl, Alkoxygruppen mit 1 bis 4 Kohlenstoffatomen, wie Methoxy, Äthoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Diejenigen Reaktivfarbstoffe, worin D der Rest eines Azofarbstoffes ist, enthalten als Substituenten insbesondere Methyl, Äthyl, Methoxy, Benzoylamino, Amino, Acetylamino, Ureido, Sulfomethyl, Hydroxy, Carboxy, Halogen und Sulfo.

Als Alkylrest kommt für R oder $R_1$ in Formel (1) ein geradkettiger oder verzweigter Alkylrest in Betracht, der auch substituiert sein kann, z.B. durch Halogen, Hydroxy, Cyan oder Sulfo. Als Beispiele für R seien genannt: Methyl, Äthyl, Propyl, Isopropyl, Butyl, Isobutyl, sek.-Butyl, tert.-Butyl, β-Chloräthyl, β-Hydroxyäthyl, β-Hydroxybutyl, β-Cyanäthyl und Sulfomethyl.

Der aliphatische oder aromatische Rest A ist vorzugsweise ein Alkylen- oder Arylenrest. Der Ausdruck aliphatischer Rest schliesst auch cycloaliphatische Reste ein.

So kann A ein langer (z.B. mit 10 oder mehr Kohlenstoffatomen) oder kürzerer, geradkettiger oder verzweigter Alkylenrest sein; insbesondere kommt ein Alkylenrest mit 2 bis 6 Kohlenstoffatomen in Betracht, z.B. Äthylen, Propylen, Butylen, Hexylen oder Cyclohexylen.

Als Arylenrest ist A z.B. ein Naphthylenrest, der Rest eines Diphenyls oder Stilbens oder insbesondere ein Phenylenrest. Der Rest A kann weitere Substituenten enthalten, z.B. Halogenatome, wie Fluor, Chlor und Brom, Alkylgruppen mit 1 bis 4 Kohlenstoffatomen, wie Methyl, Äthyl und Propyl, Alkoxygruppen mit 1 bis 4 Kohlenstoffatomen, wie Methoxy, Äthoxy, Propyloxy und Isopropyloxy, Carboxy oder Sulfo.

In dem erfindungsgemässen Verfahren werden bevorzugt verwendet:

a) Reaktivfarbstoffe der Formel (1), worin D der Rest eines sulfogruppenhaltigen organischen Farbstoffes aus einer der oben angegebenen Reihen, R und $R_1$ unabhängig voneinander Wasserstoff, Methyl oder Äthyl, und A gegebenenfalls substituiertes $C_{2-6}$-Alkylen oder gegebenenfalls substituiertes Phenylen oder Naphthylen ist.

Falls der über das $-N(R_1)$-Brückenglied an den s-Triazinring gebundene Rest ein Naphthalinrest ist, kann dieser in α- oder β-Stellung sein.

b) Reaktivfarbstoffe gemäss a), der Formel

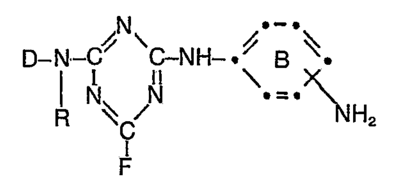 (2),

worin D und R die unter a) angegebenen Bedeutungen haben, und der Benzolrest B als weitere Substituenten $C_{1-4}$-Alkyl, $C_{1-4}$-Alkoxy, Halogen, Carboxy, Sulfo oder Amino enthalten kann.

c) Reaktivfarbstoffe gemäss b), der Formel

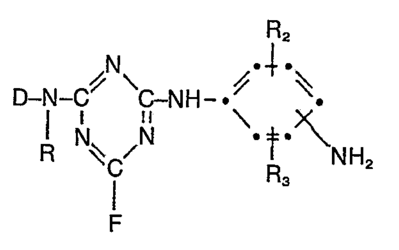 (3),

worin D und R die unter b) angegebenen Bedeutungen haben, $R_2$ Wasserstoff oder Methyl, und $R_3$ Wasserstoff, Carboxy, Sulfo oder Amino ist.

d) Reaktivfarbstoffe gemäss a), der Formel

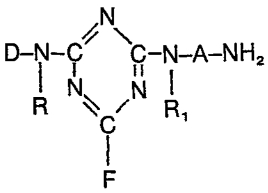
(4),

worin D, R und $R_1$ die unter a) angegebenen Bedeutungen haben, und A Äthylen oder Propylen, das durch Hydroxy substituiert sein kann, ist.

e) Reaktivfarbstoffe der Formel (1), worin D der Rest eines Mono- oder Disazofarbstoffes ist.

f) Reaktivfarbstoffe der Formel (1), worin D der Rest eines Metallkomplexazo- oder Formazanfarbstoffes ist.

g) Reaktivfarbstoffe der Formel (1), worin D der Rest eines Anthrachinonfarbstoffes ist.

h) Reaktivfarbstoffe gemäss f), worin D der Rest eines Metallkomplexazofarbstoffes der Benzol- oder Naphthalinreihe ist.

i) Reaktivfarbstoffe gemäss h) worin D der Rest eines 1 : 1-Kupferkomplexazofarbstoffes der Benzol- oder Naphthalinreihe ist, und das Kupferatom an jeweils eine metallisierbare Gruppe in ortho-Position zur Azobindung gebunden ist.

j) Reaktivfarbstoffe gemäss e) der Formel

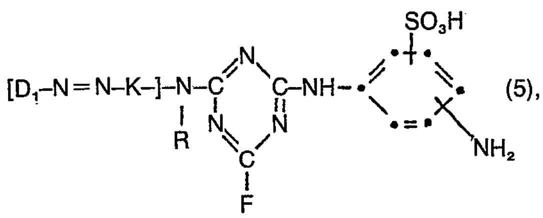
(5),

worin $D_1$ der Rest einer Diazokomponente der Benzol- oder Naphthalinreihe, K der Rest einer Kupplungskomponente der Benzol- oder Naphthalinreihe oder der heterocyclischen Reihe, und R Wasserstoff oder gegebenenfalls substituiertes $C_{1-4}$-Alkyl ist, und der Reaktivrest an die Diazokomponente oder an die Kupplungskomponente gebunden ist.

k) Reaktivfarbstoffe gemäss j), worin R Wasserstoff, Methyl oder Äthyl ist.

Die Farbstoffe der Formel (1) sind faserreaktiv. Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die erfindungsgemäss verwendeten Reaktivfarbstoffe der Formel (1) werden hergestellt, indem man einen organischen Farbstoff der Formel

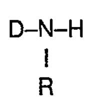
(6)

oder ein Farbstoffvorprodukt, 2,4,6-Trifluor-s-triazin und eine Verbindung der Formel

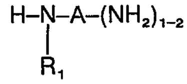
(7)

kondensiert, wobei D, R, $R_1$ und A in den Formeln (6) und (7) die unter Formel (1) angegebenen Bedeutungen haben, und dass man im Falle der Verwendung von Farbstoffvorprodukten, die erhaltenen Zwischenverbindungen in die gewünschten Endfarbstoffe umwandelt.

Bei dem im vorangehenden beschriebenen Verfahren können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe, insbesondere der Formeln (6) und (7) ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Eine wichtige Ausführungsform besteht darin, dass man 2,4,6-Trifluor-s-triazin zuerst mit einem organischen Farbstoff der Formel (6) und danach mit einer Verbindung der Formel (7) kondensiert.

Oder man setzt zunächst 2,4,6-Trifluor-s-triazin mit einer Verbindung der Formel (7) um, und kondensiert die erhaltene Difluortriazinverbindung mit einem organischen Farbstoff der Formel (6).

Diejenigen Reaktivfarbstoffe der Formel (1), worin D der Rest eines aus zwei oder mehr als zwei Komponenten zusammengesetzten organischen Farbstoffes ist, können auch nach einer Verfahrensvariante hergestellt werden, bei welcher man von Farbstoffvorprodukten ausgeht. Das geschieht in der Weise, dass man eine Komponente des Farbstoffs der Formel (6) die eine Gruppe –M(R)H enthält, und 2,4,6-Trifluor-s-triazin kondensiert, und in einer geeigneten Stufe des Verfahrens, gegebenenfalls auch vorher, mit einer Verbindung der Formel (7) und mit der anderen (bzw. den übrigen) Komponente(n) des Farbstoffs der Formel (6) umsetzt, und gegebenenfalls eine andere Umwandlungsreaktion anschliesst.

Beispiele für derartige, aus zwei oder mehr als zwei Komponenten zusammengesetzte organische Farbstoffe sind: Monoazo-, Disazo-, Trisazo-, Tetrazo-, Metallkomplexazo-, Formazan- und Azomethinfarbstoffe.

Die oben beschriebene Verfahrensvariante ist vor allem wichtig für die Herstellung von Reaktivfarbstoffen der Formel (1), worin D der Rest eines sulfogruppenhaltigen Azofarbstoffes ist. In diesen kann derjenige Teil des Azofarbstoffrestes, an den der Reaktivrest unmittelbar gebunden ist, entweder der Rest der Diazokomponente oder der Rest der Kupplungskomponente sein. Dadurch ergeben sich zwei wichtige Ausführungsformen der oben beschriebenen Verfahrensvariante.

Die eine der beiden Varianten ist dadurch gekennzeichnet, dass man eine Diazokomponente des Farbstoffes, die eine Gruppe –N(R)H enthält, mit 2,4,6-Trifluor-s-triazin kondensiert, das erhaltene Kondensationsprodukt diazotiert und auf eine Kupplungskomponente kuppelt, und vor oder nach der Kondensation oder nach der Kupplung mit einer Verbindung der Formel (7) kondensiert.

Die zweite Variante ist dadurch gekennzeichnet, dass man eine Kupplungskomponente des Farbstoffs, die eine Gruppe –N(R)H enthält, mit 2,4,6-Trifluor-s-triazin kondensiert, und auf das so erhaltene Kondensationsprodukt eine diazotierte Diazokomponente kuppelt, und vor oder nach der Kondensation oder nach der Kupplung mit einer Verbindung der Formel (7) kondensiert.

Nach diesen Verfahrensvarianten können Reaktivfarbstoffe der Formel (1), die zwei Reaktivreste enthalten, hergestellt werden, indem man eine Diazokomponente, die eine Gruppe –N(R)H enthält, mit 2,4,6-Trifluor-s-triazin kondensiert, dass man ferner eine Kupplungskomponente, die eine Gruppe – N(R)H enthält, mit 2,4,6-Trifluor-s-triazin kondensiert und dass man das Kondensationsprodukt der Diazokomponente diazotiert und auf das Kondensationsprodukt der Kupplungskomponente kuppelt, wobei das R im Kondensationsprodukt der Diazokomponente unabhängig ist von dem R im Kondensationsprodukt der Kupplungskomponente, und dass man vor oder nach der Kupplung beide Triazinreste mit Verbindungen der Formel (7) kondensiert.

Farbstoffe der formel (1), die zwei Reaktivreste enthalten, sind auch in der Weise herstellbar, dass man Farbstoffe der Formel (6) verwendet, die in D eine weitere Gruppe –N(R)H enthalten, diese mit einer entsprechenden Menge 2,4,6-Trifluor-s-triazin kondensiert, so dass zwei Fluortriazinreste in das Farbstoffmolekül eingeführt werden, und dann mit einer entsprechenden Menge einer Verbindung der Formel (7) kondensiert.

Vorzugsweise verwendet man als Ausgangsstoffe organische Farbstoffe der Formel (6), worin D der Rest eines Mono-oder Disazofarbstoffes ist.

Eine bevorzugte Verfahrensweise ist dadurch gekennzeichnet, dass man organische Farbstoffe der Formel

$$[D_1\text{–N}=\text{N–K}]\text{—}[\text{NHR}]_{1-2} \quad (8),$$

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, als Ausgangsstoffe verwendet.

Falls die fertigen Reaktivfarbstoffe der Formel (1) komplexbildende Gruppen enthalten, können sie nachträglich mit schwermetallabgebenden Mitteln umgesetzt werden.

Nach einer weiteren bevorzugten Herstellungsweise verwendet man Farbstoffe der Formel (6), worin D der Rest eines Metallkomplexazo- oder Formazanfarbstoffes ist.

Als Verbindungen der Formel verwendet man vorzugsweise die Verbindungen der Formel

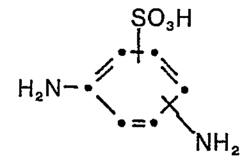
(9).

Die Kondensation des 2,4,6-Trifluor-s-triazins mit den organischen Farbstoffen der Formel (6) bzw. den eine Gruppe –N(R)H enthaltenden diazotierbaren und/oder kupplungsfähigen Komponenten erfolgen vorzugsweise in wässriger Lösung oder Suspensionen, bei niedrigen Temperaturen, vorzugsweise zwischen 0 °C und 5 °C und bei schwach saurem, neutralem bis schwach alkalischem $p_H$-Wert. Vorteilhaft wird der bei der Kondensation freiwerdende Fluorwasserstoff laufend durch Zugabe wässriger Alkalihydroxide, -carbonate oder -bicarbonate neutralisiert. Für die weitere Umsetzung der so erhaltenen Fluortriazinfarbstoffe bzw. für die Umsetzung des 2,4,6-Trifluor-s-triazins mit den Verbindungen der Formel (7) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25 °C, unter Zusatz säurebindender Mittel, bevorzugt Natriumcarbonat, in einem pH-Bereich von 2 bis 8, bevorzugt 5 bis 6,5, durchgeführt.

Die Kondensation des Flurotriazins mit einer Verbindung der Formel (7) kann vor oder nach der Kondensation des Fluortriazins mit einem Farbstoff der Formel (6) geschehen. Die Kondensation des Fluortriazins mit einer Verbindung der Formel (7) erfolgt vorzugsweise in wässriger Lösung oder Suspension, bei niedriger Temperatur und bei schwach saurem bis neutralem pH-Wert. Auch hier wird der bei der Kondensation freiwerdende Fluorwasserstoff vorteilhafterweise durch laufende Zugabe von wässrigen Alkalihydroxiden, -carbonaten oder -bicarbonaten neutralisiert.

Im folgenden sollen mögliche Ausgangsstoffe, die zur Herstellung der Reaktivfarbstoffe der Forme (1) verwendet werden können, einzeln genannt werden.

Als Farbstoffe der Formel (8) kommen besonders Farbstoffe der folgenden Strukturtypen in Betracht:

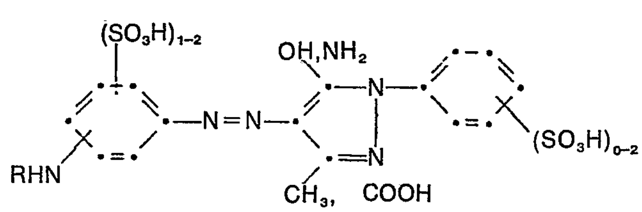

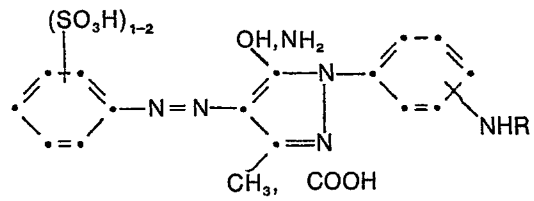

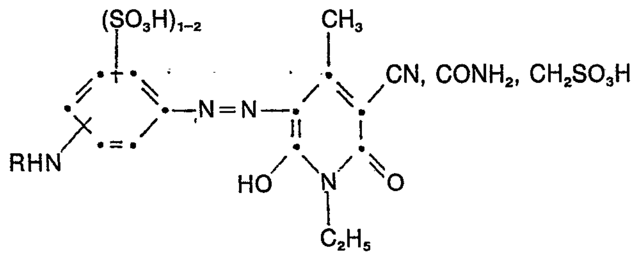

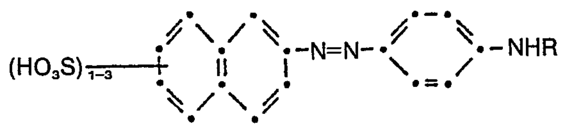

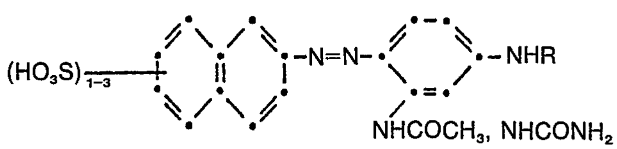

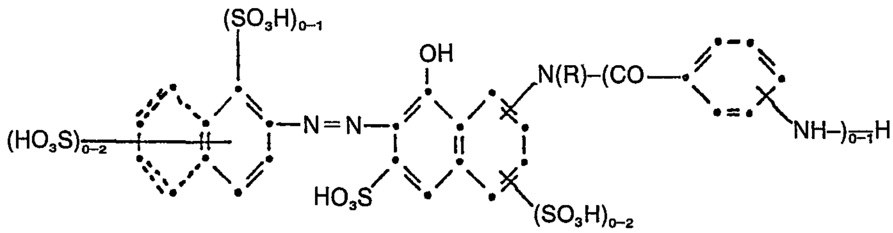

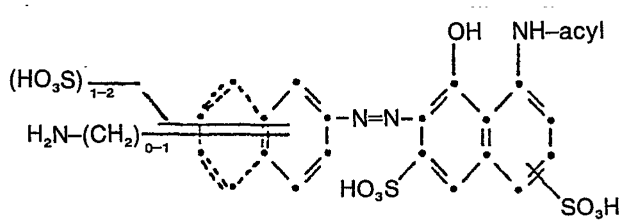

worin acyl z. B. Acetyl oder gegebenenfalls substituiertes Benzoyl ist.

Metallkomplexe von Farbstoffen der Formeln:

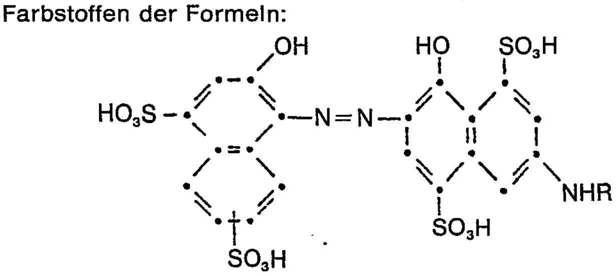

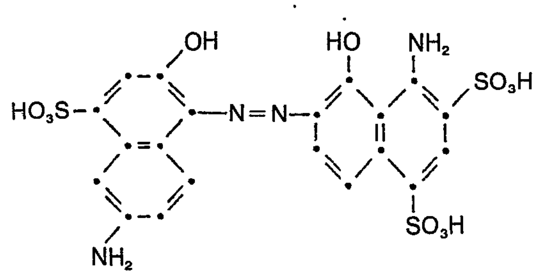

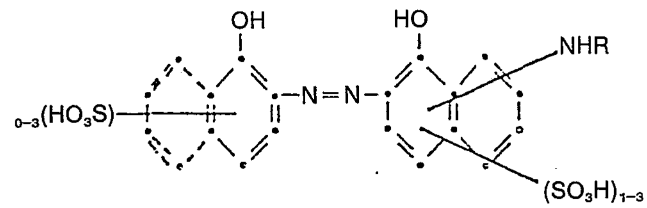

Als Metallatom sind Cu (1 : 1-Komplex) oder Cr und Co /1 : 2-Komplex) bevorzugt. Cr- und Co-Komplexe können die Azoverbindung der oben angegebenen Formel einmal oder zweimal enthalten, d.h. sie können symmetrisch oder mit beliebigen anderen Ligandengruppen unsymmetrisch aufgebaut sein.

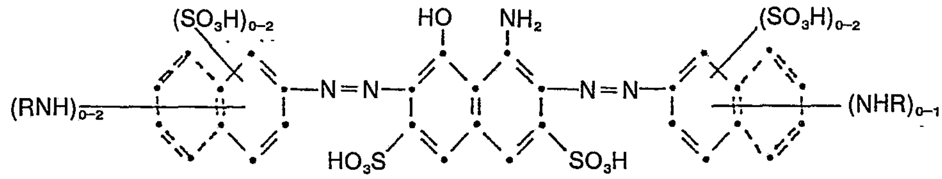

Die durch Strichelungen angedeuteten kondensierten Ringe stehen für alternativ mögliche Naphthalinsysteme.

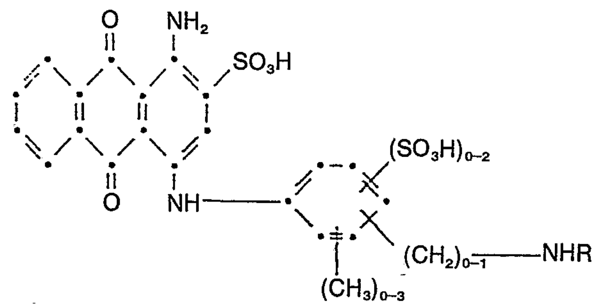

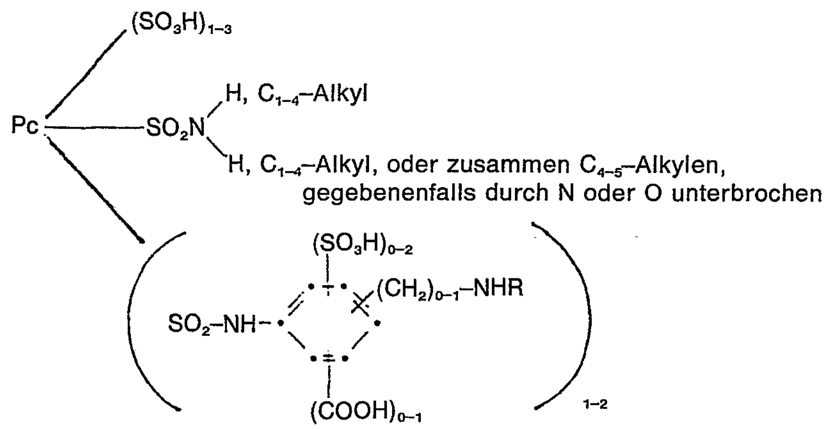

In dieser Formel steht Pc für den Cu- oder Ni-Phthalocyaninrest. Die Gesamtzahl der Substituenten am Pc-Gerüst ist dabei 4.

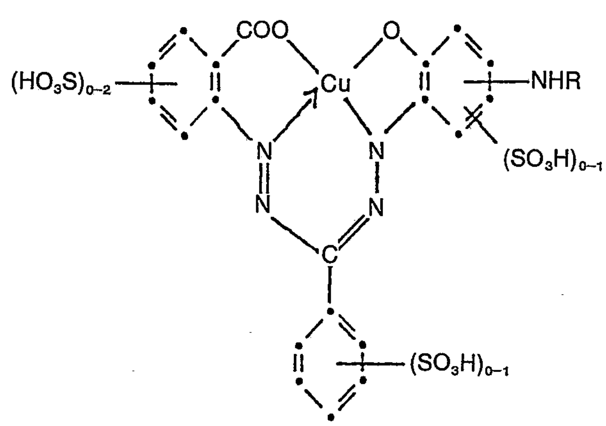

Die Farbstoffe der oben angegebenen Formeln können in den Alkyl- oder Arylresten weitersubstituiert sein, insbesondere durch die bei der Erläuterung von D in Formel (1) genannten Substituenten.

Besonders wichtige Azofarbstoffe der Formel (8) sind die folgenden:

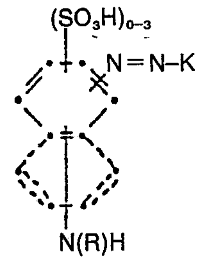

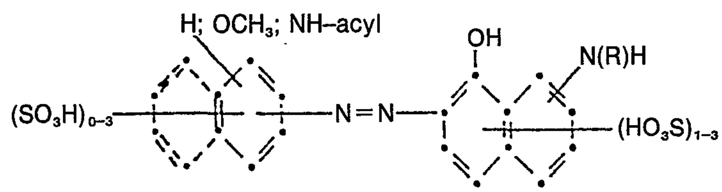

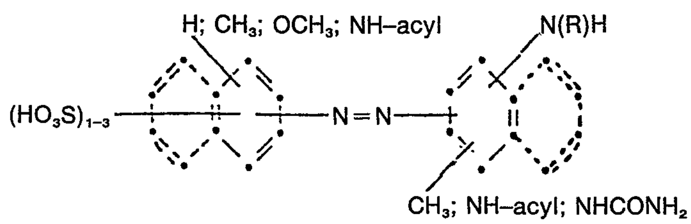

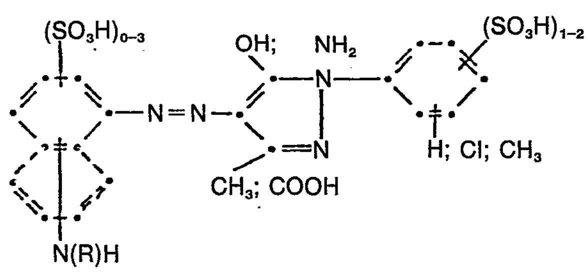

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und R die bei der Erläuterung der Formel (1) angegebenen Bedeutungen hat, sowie die Metallkomplex-Azofarbstoffe der Formeln

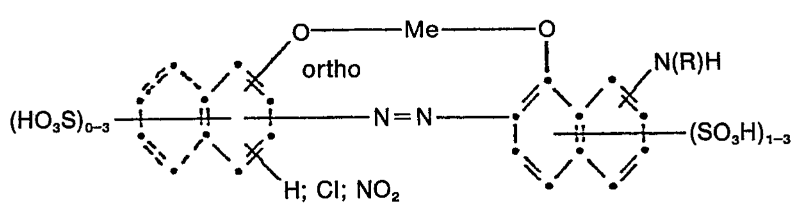

und

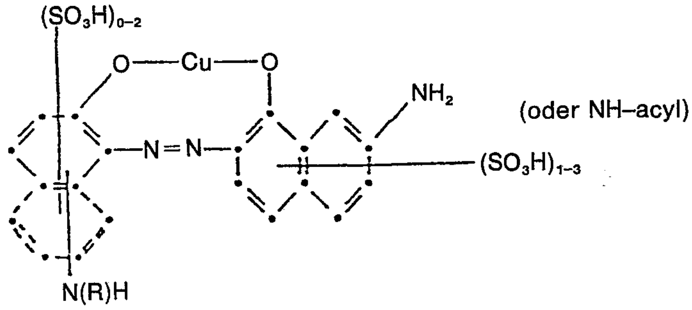

worin R und Acyl die oben angegebenen Bedeutungen haben und Me für Cu, Cr oder Co steht.

2,4,6-Trifluor-s-triazin (Cyanurfluorid) oder primäre Kondensationsprodukte des 2,4,6-Trifluor-s-triazins mit den weiter unten genannten Verbindungen der Formel (7).

Verbindungen der Formel (7):

Methylendiamin, Äthylendiamin, n-Propylendiamin,
n-Butylendiamin, 1-Methyl-n-propylendiamin,
n-Hexylendiamin, 2-Äthyl-n-butylendiamin,
2-Hydroxy-n-propylendiamin,
1-Amino-3-methylaminopropan,
β-(β-Amino-äthyl-amino)-äthylamin,
1,2,3-Triaminopropan, 1,3-Diaminobenzol,
1,4-Diaminobenzol, 1,3-Diamino-4-chlorbenzol,
1,3-Diamino-4-methylbenzol,
1,3-Diamino-4-äthylbenzol,
1,3-Diamino-4-methoxybenzol,
1,3-Diamino-4-äthoxybenzol,
1,4-Diamino-2-methylbenzol,
1,4-Diamino-2-methoxybenzol,
1,4-Diamino-2-äthoxybenzol,
1,4-Diamino-2-chlorbenzol,
1,4-Diamino-2,5-dimethylbenzol,
1,4-Diamino-2,5-diäthylbenzol,
1,4-Diamino-2-methyl-5-methoxybenzol,
1,4-Diamino-2,5-dimethoxybenzol,
1,4-Diamino-2,5-diäthoxybenzol,
2,6-Diamino-naphthalin,
1,3-Diamino-2,4,6-trimethylbenzol,
1,4-Diamino-2,3,4,6-tetramethylbenzol,
1,3-Diamino-4-nitrobenzol,
4,4′-Diamino-stilben,
4,4′-Diaminodiphenylmethan,
4,4′-Diaminobiphenyl (Benzidin),
3,3′-Dimethylbenzidin, 3,3′-Dimethoxybenzidin,
3,3′-Dichlorbenzidin, 3,3′Dicarboxybenzidin,
3,3′-Dicarboxymethoxy-benzidin,
2,2′-Dimethylbenzidin,
4,2′-Diaminodiphenyl (Diphenylin),
2,6-Diaminonaphthalin-4,8-disulfonsäure,
1,4-Diaminobenzol-2-sulfonsäure,
1,4-Diaminobenzol-2,5-disulfonsäure,
1,4-Diaminobenzol-2,6-disulfonsäure,
1,3-Diaminobenzol-4-sulfonsäure,
1,3-Diaminobenzol-4,6-disulfonsäure,
1,4-Diamino-2-chlorbenzol-5-sulfonsäure,
1,4-Diamino-2-methylbenzol-5-sulfonsäure,
1,5-Diamino-6-methylbenzol-3-sulfonsäure,
1,3-Diamino-6-methylbenzol-4-sulfonsäure,
3-(3′- bzw. 4′-Aminobenzoylamino)-1-aminobenzol-6-sulfonsäure,
1-(4′-Aminobenzoylamino)-4-aminobenzol-2,5-disulfonsäure,
1,4-Diaminobenzol-2-carbonsäure,
1,3-Diaminobenzol-4-carbonsäure,
1,2-Diaminobenzol-4-carbonsäure,
1,3-Diaminobenzol-5-carbonsäure,
1,4-Diamino-2-methylbenzol,
4,4′-Diaminodiphenyloxid,
4,4′-Diaminodiphenylharnstoff-2,2′-disulfonsäure,
4,4′-Diaminodiphenyloxyäthan-2,2′-disulfonsäure,
4,4′-Diaminostilben-2,2′-disulfonsäure,
4,4′-Diaminodiphenyläthan-2,2′-disulfonsäure,
1,3,5-Triaminobenzol.

Geht man zur Herstellung der bevorzugten Reaktivfarbstoffe der Formel (1), worin D der Rest eines Azofarbstoffes ist, nicht von den fertigen Aminofarbstoffen, z.B. solchen die weiter vorn beschrieben sind, sondern von Farbstoffvorprodukten, d.h. den Diazo- und Kupplungskomponenten aus, kommen beispielsweise die folgenden in Betracht:

Diazokomponenten:
Aminobenzol,
1-Amino-2-, -3- oder -4-methylbenzol,
1-Amino-2-, -3- oder -4-methoxybenzol,
1-Amino-2-, -3- oder -4-chlorbenzol,
1-Amino-2,5-dichlorbenzol,
1-Amino-2,5-dimethylbenzol,
1-Amino-3-methyl-6-methoxybenzol,
1-Amino-2-methoxy-4-nitrobenzol,
1-Aminobiphenyl,
1-Aminobenzol-2-, -3- oder -4-carbonsäure,
2-Aminodiphenyläther,
1-Aminobenzol-2-, -3- oder -4-sulfonsäureamid, -N-methylamid, -N-äthylamid, -N,N-dimethylamid oder -N,N-diäthylamid,
Dehydrothio-p-toluidin-sulfonsäure,
1-Amino-3-trifluormethyl-6-sulfonsäure,
1-Amino-3- oder -4-nitrobenzol,
1-Amino-3- oder -4-acetylaminobenzol,
1-Aminobenzol-2-, -3- oder -4-sulfonsäure,
1-Aminobenzol-2,4- und -2,5-disulfonsäure,
1-Amino-4-methylbenzol-2-sulfonsäure,
1-Amino-3-methylbenzol-6-sulfonsäure,
1-Amino-6-methylbenzol-3- oder -4-sulfonsäure,
1-Amino-2-carboxybenzol-4-sulfonsäure,
1-Amino-4-carboxybenzol-2-sulfonsäure,
1-Amino-4- oder -5-chlorbenzol-2-sulfonsäure,
1-Amino-6-chlorbenzol-3- oder -4-sulfonsäure,
1-Amino-3,4-dichlorbenzol-6-sulfonsäure,
1-Amino-2,5-dichlorbenzol-6-sulfonsäure,
1-Amino-2,5-dichlorbenzol-4-sulfonsäure,
1-Amino-4-methyl-5-chlorbenzol-2-sulfonsäure,
1-Amino-5-methyl-4-chlorbenzol-2-sulfonsäure,
1-Amino-4- oder -5-methoxybenzol-2-sulfonsäure,
1-Amino-6-methoxybenzol-3- oder -4-sulfonsäure,
1-Amino-6-äthoxybenzol-3- oder -4-sulfonsäure,
1-Amino-2,4-dimethoxybenzol-6-sulfonsäure
1-Amino-2,5-dimethoxybenzol-4-sulfonsäure,
1-Amino-3-acetylaminobenzol-6-sulfonsäure,
1-Amino-4-acetylaminobenzol-2-sulfonsäure,
1-Amino-3-acetylamino-4-methylbenzol-6-sulfonsäure,
2-Amino-1-methylbenzol-3,5-disulfonsäure,
1-Amino-4-methoxybenzol-2,5-disulfonsäure,
1,3-Diaminobenzol-4-sulfonsäure,
1,4-Diaminobenzol-3-sulfonsäure,
1,4-Diaminobenzol-2,5-disulfonsäure,
1-Amino-3- oder -4-nitrobenzol-6-sulfonsäure,
1-Aminonaphthalin, 2-Aminonaphthalin,
1-Aminonaphthalin-2-, -4-, -5-, -6-, -7- oder -8-sulfonsäure,
2-Aminonaphthalin-1-, -3-, -4-, -5-, -6-, -7- oder 8-sulfonsäure,
1-Aminonaphthalin-3,6- oder -5,7-disulfonsäure,

2-Aminonaphthalin-1,5, -1,7-, -3,6-, -5,7-, -4,8- oder -6,8-disulfonsäure,
1-Aminonaphthalin-2,5,7-trisulfonsäure,
2-Aminonaphthalin-1,5,7-, -3,6,8- oder -4,6,8-trisulfonsäure,
1-Hydroxy-2-aminobenzol-4-sulfonsäure,
1-Hydroxy-2-aminobenzol-5-sulfonsäure,
1-Hydroxy-2-aminobenzol-4,6-disulfonsäure,
1-Hydroxy-2-amino-4-acetylaminobenzol-6-sulfonsäure,
1-Hydroxy-2-amino-6-acetylaminobenzol-4-sulfonsäure,
1-Hydroxy-2-amino-4-chlorbenzol-5-sulfonsäure,
1-Hydroxy-2-amino-4-methylsulfonylbenzol,
1-Amino-2-hydroxy-6-nitronaphthalin-4-sulfonsäure,
2-Amino-1-hydroxy-naphthalin-4,8-disulfonsäure,
4-Aminoazobenzol-3,4′-disulfonsäure,
3-Methoxy-4-amino-6-methylazobenzol-2′,4′-disulfonsäure,
3-Methoxy-4-amino-6-methylazobenzol-2′,5′-disulfonsäure.

Kupplungskomponenten:
Phenol, 1-Hydroxy-3- oder -4-methylbenzol,
1-Hydroxybenzol-4-sulfonsäure,
1-Hydroxynaphthalin, 2-Hydroxynaphthalin,
2-Hydroxynaphthalin-6- oder -7-sulfonsäure,
2-Hydroxynaphthalin-3,6- oder -6,8-disulfonsäure,
1-Hydroxynaphthalin-4-sulfonsäure,
1-Hydroxynaphthalin-4,6- oder 4,7-disulfonsäure,
1-Amino-3-methylbenzol,
1-Amino-2-methoxy-5-methylbenzol,
1-Amino-2,5-dimethylbenzol,
3-Aminophenylharnstoff,
1-Amino-3-acetylaminobenzol,
1-Amino-3-hydroxyacetylaminobenzol,
1,3-Diaminobenzol-4-sulfonsäure,
1-Aminonaphthalin-6- oder -8-sulfonsäure,
1-Amino-2-methoxynaphthalin-6-sulfonsäure,
2-Aminonaphthalin-5,7-disulfonsäure,
1-Amino-8-hydroxynaphthalin-6-sulfonsäure,
1-Amino-8-hydroxynaphthalin-2,4-disulfonsäure,
2-Hydroxy-3-aminonaphthalin-5,7-disulfonsäure,
1-Amino-8-hydroxynaphthalin-2,4,6-trisulfonsäure,
1-Hydroxy-8-acetylaminonaphthalin-3-sulfonsäure,
1-Benzoylamino-8-hydroxynaphthalin-3,6- oder -4,6-disulfonsäure,
2-Benzoylamino-5-hydroxynaphthalin-7-sulfonsäure,
2-Amino-5-hydroxynaphthalin-7-sulfonsäure,
2-Methyl- bzw. 2-Äthylamino-5-hydroxynaphthalin-7-sulfonsäure,
2-(N-Acetyl-N-methylamino)-5-hydroxynaphthalin-7-sulfonsäure,
2-Acetylamino-5-hydroxynaphthalin-7-sulfonsäure,
2-Amino-5-hydroxynaphthalin-1,7-disulfonsäure,
2-Amino-8-hydroxynaphthalin-6-sulfonsäure,
2-Methyl- bzw. -Äthylamino-8-hydroxynaphthalin-6-sulfonsäure,
2-(N-Acetyl-N-methylamino)-8-hydroxynaphthalin-6-sulfonsäure,
2-Acetylamino-8-hydroxynaphthalin-6-sulfonsäure,
2-Amino-8-hydroxynaphthalin-3,6-disulfonsäure,
2-Acetylamino-8-hydroxynaphthalin-3,6-disulfonsäure,
1-Amino-5-hydroxynaphthalin-7-sulfonsäure,
1-Amino-8-hydroxynaphthalin-3,6- bzw. -4,6-disulfonsäure,
1-Acetylamino-8-hydroxynaphthalin-3,6- bzw. -4,6-disulfonsäure,
1-(4′-Aminobenzoylamino)-8-hydroxynaphthalin-3,6- bzw. -4,6-disulfonsäure,
1-(4′-Nitrobenzoylamino)-8-hydroxynaphthalin-3,6- bzw. -4,6-disulfonsäure,
1-(3′-Aminobenzoylamino)-8-hydroxynaphthalin-3,6- bzw. -4,6-disulfonsäure,
1-(3′-Nitrobenzoylamino)-8-hydroxynaphthalin-3,6- bzw. -4,6-disulfonsäure,
2-(4′-Amino-3′-sulfophenylamino)-5-hydroxynaphthalin-7-sulfonsäure,
3-Methylpyrazolon-(5),
1-Phenyl-3-methyl-5-pyrazolon,
1-(4′-Sulfophenyl)-3-methyl-5-pyrazolon,
1-(4′-Sulfophenyl)-pyrazolon-(5)-3-carbonsäure,
1-(3′-Aminophenyl)-3-methyl-5-pyrazolon,
1-(2′,5′-Disulfophenyl)-3-methyl-5-pyrazolon,
1-(2′-Methyl-4′-sulfophenyl)-5-pyrazolon-3-carbonsäure,
1-(4′,8′-Disulfonaphthyl-[2′])-3-methyl-5-pyrazolon,
1-(5′,7′-Disulfonaphthyl-[2′])-3-methyl-5-pyrazolon,
1-(2′,5′-Dichlor-4′-sulfophenyl)-3-methyl-5-pyrazolon,
3-Aminocarbonyl-4-methyl-6-hydroxypyridon-(2),
1-Äthyl-3-cyan- oder -3-chlor-4-methyl-6-hydroxypyridon-(2),
1-Äthyl-3-sulfomethyl-4-methyl-6-hydroxypyridon-(2),
2,4,6-Triamino-3-cyanpyridin,
2-(3′-Sulfophenylamino)-4,6-diamino-3-cyanpyridin,
2-(2′-Hydroxyäthylamino)-3-cyan-4-methyl-6-aminopyridin,
2,6-Bis-(2′-hydroxyäthylamino)-3-cyan-4-methylpyridin,
1-Äthyl-3-carbamoyl-4-methyl-6-hydroxypyridon-(2),
1-Äthyl-3-sulfomethyl-4-methyl-5-carbamoyl-6-hydroxypyridon-(2),
N-Acetoacetylaminobenzol,
1-(N-Acetoacetylamino)-2-methoxybenzol-5-sulfonsäure,
4-Hydroxychinolon-(2),
1-Amino-8-hydroxy-2-(phenylazo)-naphthalin-3,6-disulfonsäure,
1-Amino-8-hydroxy-2-(4′-sulfophenylazo)-naphthalin-3,6-disulfonsäure,
1-Amino-8-hydroxy-2-(2′,5′-disulfophenylazo)-naphthalin-3,6-disulfonsäure.

Geht man von Farbstoffvorprodukten aus, muss mindestens eine der beiden Komponenten, die Diazokomponente oder die Kupplungskomponente eine acylierbare Aminogruppe aufweisen. Die Diazotierung der eine diazotierbare Aminogruppe

enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Das erfindungsgemässe Verfahren dient zur Herstellung von Färbungen und Drucken von textilen Fasermaterialien aller Art, wie Seide, Leder, Wolle, Polyesterfasern, Polyamidfasern und Polyurethanen, insbesondere aber cellulosehaltiger Materialien faseriger Struktur, wie Leinen, Hanf, Zellstoff, regenerierte Cellulose, und vor allem Bauwolle. Das erfindungsgemässe Verfahren ist auch zum Färben oder Bedrucken von hydroxygruppenhaltigen Fasern geeignet, die in Mischgeweben enthalten sind. z.B. von Gemischen aus Baumwolle mit Polyesterfasern oder Polyamidfasern. Das erfindungsgemässe Verfahren eignet sich zum Färben nach der Ausziehmethode, wobei mit Dreistufen-Färbeverfahren besonders gute Ergebnisse erzielt werden. Dabei ist eine Ausziehstufe bei neutralem pH-Wert gefolgt von zwei sich im pH-Wert und/oder Temperatur unterscheidenden alkalischen Fixierstufen. Ebenso eignet es sich zum Färben nach der Foulardfärbemethode, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet ist es für die sogenannte Kaltverweilmethode, wonach der Farbstoff zusammen mit dem Alkali auf dem Foulard aufgebracht wird und danach durch mehrstündiges Lagern bei Raumtemperatur fixiert wird.

Die erfindungsgemäss verwendeten Farbstoffe lassen sich auf verschiedene Weise auf das Fasermaterial applizieren und auf der Faser fixieren, insbesondere in Form von wässrigen Farbstofflösungen und -druckpasten.

Zur Durchführung des erfindungsgemässen Verfahrens im alkalischen pH-Bereich werden als alkalische säurebindende Mittel beispielsweise Natriumhydroxyd, Kaliumhydroxyd oder ein Alkalisalz einer schwachen Säure, wie Natriumcarbonat oder -bicarbonat, Trinatriumphosphat, Dinatriumphosphat, Natriumsilikat oder trichloressigsaures Natrium oder Mischungen aus diesen säurebindenden Mitteln verwendet.

Die den Farbstoff und das säurebindende Mittel enthaltenden Färbeflotten und Druckpasten können innerhalb eines breiten Temperaturbereiches auf das zu färbende Material aufgebracht werden, vorzugsweise bie Raumtemperatur, 15 bis 30 °C, oder bei Temperaturen bis zu 60 °C. Man geht zweckmässigerweise so vor, dass man das Fasergut mit den Färbeflotten, die gegebenenfalls neutrale Salze enthalten, imprägniert und abquetscht, beispielsweise auf üblichem Wege foulardiert, und es, gegebenenfalls nach vorhergehender Zwischentrocknung, zwecks Fixierung der Farbstoffe einer Alkalibehandlung odr in Gegenwart von Alkali einer Hitzebehandlung unterwirft. In ähnlicher Weise erzeugt man Drucke, indem man das Fasermaterial mit den genannten Druckpasten bedruckt, zwischentrocknet und es zur Fixierung der Farbstoffe einer Hitzebehandlung unterwirft.

Erfolgt das Färben nach dem Ausziehverfahren, so enthält das Färbebad eines oder mehrere der oben genannten säurebindenden Mittel und gegebenenfalls die üblichen Zusätze, wie anorganische Salze, Harnstoff oder andere weiter unten genannte Hilfsmittel. Die Ware wird mit den wässrigen, gegebenenfalls salzhaltigen Farbstofflösungen imprägniert, und die Farbstoffe werden nach einer Alkalibehandlung oder in Gegenwart von Alkali, gegebenenfalls unter Wärmeeinwirkung fixiert.

In Abhängigkeit von der Konzentration und der Art des säurebindenden Mittels ist es auch möglich die Fixierung der Farbstoffe bei Raumtemperatur oder bei etwas erhöhter Temperatur, beispielsweise bei 20 bis 60 °C, durchzuführen. Nach diesem sogenannten Kaltverweilverfahren wird z.B. der Farbstoff zusammen mit dem Alkali auf dem Foulard aufgebracht und dann durch mehrstündiges Lagern der imprägnierten oder bedruckten feuchten Ware bei Raumtemperatur fixiert.

Die Fixation der Färbungen und Drucke im alkalischen Bereich durch Hitzebehandlung kann nach verschiedenen, in der Technik üblichen Methoden erfolgen, beispielsweise durch Dämpfen mit Sattdampf bei ca. 100 bis 103 °C (Pad-steam-Verfahren) oder mit überhitztem Wasserdampf bei Temperaturen bis 150 °C, mit Heissluft bei Temperaturen von 120 bis 230 °C (Thermofixier-Verfahren), durch Infrarotbestrahlung, durch Hindurchführen durch heisse, stark salzhaltige Lösungen, durch heisse Dämpfe indifferenter organischer Lösungsmittel oder durch Hinüberleiten der geklotzten oder bedruckten Stoffbahn über eine Reihe beheizter Walzen.

Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Färbeflotten und Druckpasten können ausser dem Alkali die allgemein üblichen Zusätze enthalten, die Lösungen beispielsweise anorganische Salze, wie Alkalichloride oder Alkalisulfate, Harnstoff, Alginatverdickungen, wasserlösliche Celluloseälkyläther sowie Dispergierungs- und Egalisierhilfsmittel, die Druckpasten beispielsweise Harnstoff, Natrium-m-nitrobenzolsulfonat und die üblichen Verdickungsmittel, wie Methylcellulose, Stärkeäther, Emulsionsverdickungen oder vorzugsweise ein Alginat, z.B. Natriumalginat.

Das alkalische säurebindende Mittel kann auch vor oder nach der Applikation der Färbeflotten oder Druckpasten, die dann dieses Mittel nicht enthalten, auf das Fasermaterial aufgebracht werden, beispielsweise durch Aufsprühen oder Klotzen einer wässrigen Lösung des Mittels. Die Lösungen dieser Mittel können allgemein übliche Zusätze enthalten, wie sie beispielsweise oben bereits genannt wurden. Werden diese Mittel gleichzeitig mit dem Farbstoff auf das zu färbende

Material appliziert, so ist es zweckmässig, sie in der Färbeflotte oder in der den Farbstoff enthaltenden Druckpaste zu lösen.

Das erfindungsgemässe Verfahren wird vorzugsweise nach der Auszieh-, Kaltverweil- oder Pad-steam-Methode ausgeführt.

Das erfindungsgemässe Verfahren eignet sich besonders zum Färben von Baumwolle nach der Ausziehfärbemethode.

Das erfindungsgemässe Verfahren kann nach der Ausziehmethode bei niedrigen Färbetemperaturen ausgeübt werden und erfordert beim Pad-steam-Verfahren nur kurze Dämpfzeiten. Es werden hohe Fixierwerte erhalten, wobei die Differenz zwischen Ausziehgrad und Fixiergrad klein, d.h. der Seifverlust gering ist.

Die mit den erfindungsgemäss zur Anwendung gelangenden Farbstoffen hergestellten Färbungen und Drucke zeichnen sich durch klare Nuancen aus. Insbesondere besitzen die Färbungen und Drucke auf Cellulosefasermaterialien eine hohe Farbstürke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit und Reibechtheit.

Das erfindungsgemässe Verfahren eignet sich auch zum Druck, insbesondere auf Baumwolle, ebenso aber auch zum Bedrucken von stickstoffhaltigen Fasern, z.B. von Wolle, Seide oder Wolle enthaltenden Mischgeweben.

Die nachfolgenden Beispiele dienen zur Erläuterung der Erfindung. Die Temperaturen sind in Celsiusgraden angegeben. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1:

2 Teile des Reaktivfarbstoffes der Formel

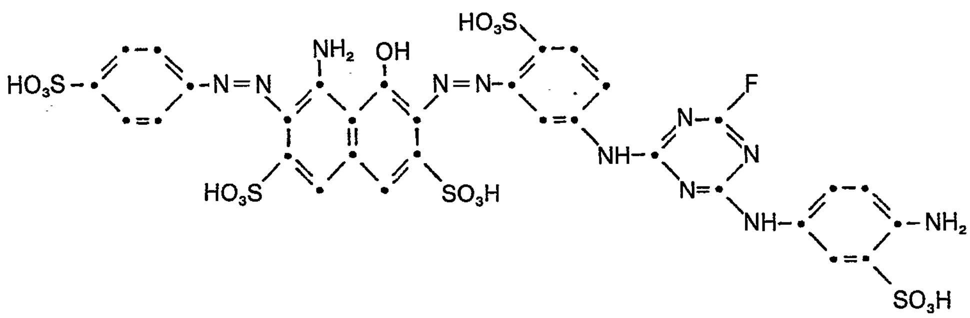

(Herstellung nachfolgend beschrieben) werden in 400 Teilen Wasser gelöst; dazu gibt man 1500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40 °C gehalten. Danach wird die gefärbte Ware gespült, während einer Viertelstunde mit einem nichtionogenen Waschmittel kochen geseift, nochmals gespült und getrocknet. Man erhält eine blaue Färbung mit guten Echtheitseigenschaften. Das Aufbauvermögen solcher Färbungen ist ausgezeichnet.

Beispiel 2:

2 Teile des in Beispiel 1 verwendeten Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35 °C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35 °C gehalten. Danach wird die Temperatur innerhalb 20 Minuten auf 60 °C erhöht. Die Temperatur wird weitere 35 Minuten bie 60 °C gehalten. Danach wird gespült, während einer Viertelstunde mit einem nichtionogenen Waschmittel kochend geseift, nochmals gespült und getrocknet. Man erhält eine blaue Färbung mit guten Echtheitseigenschaften. Das Aufbauvermögen solcher Färbungen ist sehr gut.

Beispiel 3:

4 Teile des in Beispiel 1 verwendeten Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Bauwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet. Man erhält eine blaue Färbung mit guten Echtheitseigenschaften.

Beispiel 4:

8 Teile des in Beispiel 1 verwendeten Reaktivfarbstoffes werden in 80 Teilen Wasser gelöst. Dazu gibt man 20 Teile einer Lösung, die pro Liter 40 g Natriumhydroxyd und 0,25 Liter Wasserglas

(38° Bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Vierteilstunde mit einem nichtionogenen Waschmittel kochend geseift, nochmals gespült und getrocknet. Man erhält eine schwarze Färbung mit guten Echtheitseigenschaften.

Beispiel 5:

40 Teile des in Beispiel 1 verwendeten Reaktivfarbstoffes werden in 50 Teilen Wasser gelöst. Dazu gibt man 20 Teile einer Lösung, die pro Liter 20 g Natriumhydrogencarbonat und 400 g Harnstoff enthält. Mit der erhaltenen Lösung wird ein Baumwollgewebe foulardiert, so dass es um 75% seines Gewichts zunimmt, getrocknet und dann 60 bis 90 Sekunden bei 140 °C thermofixiert. Danach wird die gefärbte Ware gespült, während einer Viertelstunde mit einem nichtionogenen Waschmittel kochend geseift, nochmals gespült und getrocknet. Man erhält eine blaue Färbung mit guten Echtheitseigenschaften.

Beispiel 6:

2 Teile des in Beispiel 1 verwendeten Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet.

Dann imprägniert man das Gewebe mit einer 20 °C warmen Lösung, die pro Liter 4 g Natriumhydroxyd und 300 g Natriumchlorid enthält, quetscht auf 75% Gewichtszunahme ab, dämpft die Färbung während 30 bis 60 Sekunden bei 100 bis 102 °C, spült, seift während einer Viertelstunde in einer 0,3%igen kochenden Lösung eines nichtionogenen Waschmittels, spült und trocknet. Man erhält eine blaue Färbung mit guten Echtheitseigenschaften.

Beispiel 7:

3 Teile des in Beispiel 1 verwendeten Reaktivfarbstoffes werden unter schnellem Rühren in 100 Teile einer Stammverdickung, enthaltend 50 Teile 5%ige Natriumalginatverdickung, 27,8 g Teile Wasser, 20 Teile Harnstroff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 bis 8 Minuten bei 102 °C in gesättigtem Dampf. Das bedruckte Gewebe wird dann gespült, gegebenenfalls kochend geseift und nochmals gespült, und anschliessend getrocknet. Man erhält einen blauen Druck mit guten Echtheitseigenschaften.

Herstellung des in Beispiel 1 verwendeten Reaktivfarbstoffes

21,1 Teile des aminogruppenhaltigen Chromophors der Formel

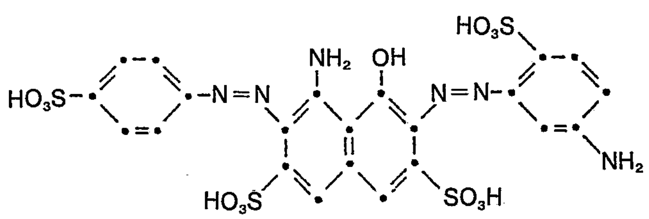

(hergestellt durch saure Kupplung von diazotierter 1-Aminobenzol-4-sulfonsäure auf 1-Amino-8-hydroxynaphthalin-3,6-disulfonsäure, alkalische Kupplung von diazotierter 1 Amino-3-acetylaminobenzol-6-sulfonsäure auf den erhaltenen Monoazofarbstoff und Verseifung des erhaltenen Disazofarbstoffes) werden in 400 ml Wasser neutral gelöst und die Lösung auf 0 bis 5 °C abgekühlt. Bei dieser Temperatur werden 4,3 Teile 2,4,6-Trifluor-1,3,5-triazin innert 15 Minuten zugetropft, wobei der pH der Reaktionsmischung durch gleichzeitige Zugabe von 2n Natriumhydroxydlösung bei 6,5 bis 7,0 gehalten wird. Nach Zusatz einer auf pH 4,0 gestellten Mischung von 6,2 Teilen 1,4-Diaminobenzol-2-sulfonsäure und 50 ml Wasser wird die Temperatur innert 2 bis 3 Stunden auf 20 bis 25 °C erhöht und dabei der pH der Reaktionsmischung durch ständige Zugabe von 2n Natriumhydroxydlösung bei 4,0 bis 4,5 gehalten. Nach vollständiger Reaktion wird die Reaktionsmischung geklärt und der gebildete Reaktivfarbstoff bei pH 6,5 durch Einstreuen von Natriumchlorid ausgesalzen, filtriert, gewaschen und im Vakuum getrocknet.

Weitere Reaktivfarbstoffe, die nach den in den Beispielen beschriebenen Färbe- beziehungsweise Druckvorschriften Färbungen beziehungsweise Drucke in dem in Tabelle 1 Spalte 3 angegebenen Farbton mit guten Echtheitseigenschaften ergeben, werden erhalten, wenn man gemäss den Angaben in der Herstellungsvorschrift die in Spalte 2 angegebenen aminogruppenhaltigen Chromphore zuerst mit 2,4,6-Trifluor-1,3,5-triazin und dann mit 1,4-Diaminobenzol-2-sulfonsäure umsetzt.

Tabelle 1

| Nr. | Chromophor | Farbton auf Baumwolle |
| --- | --- | --- |
| 1 | 2-Aminonaphthalin-3,6,8-trisulfonsäure → 1-Amino-3-methylbenzol | rotstichig-gelb |
| 2 | 2-Aminonaphthalin-3,6,8-trisulfonsäure → 3-Aminophenylharnstoff | do. |
| 3 | 2-Aminonaphthalin-4,6,8-trisulfonsäure → 1-Amino-3-methylbenzol | do. |
| 4 | 2-Aminonaphthalin-4,6,8-trisulfonsäure → 1-Amino-3-acetylaminobenzol | do. |
| 5 | 1-Amino-4-(2′, 5′-disulfophenylazo)-naphthalin-6-sulfonsäure → 1-Amino-3-methylbenzol | braun |
| 6 | 1-Amino-4-(2′,5′-disulfophenylazo)-naphthalin-6-sulfonsäure → 1-Aminonaphthalin-6-sulfonsäure | do. |
| 7 | 1-Amino-4-(4′-sulfophenylazo)-benzol-2-sulfonsäure → 1-Aminonaphthalin-6-sulfonsäure | do. |
| 8 | 1-Amino-4-(4′,6′,8′-trisulfonaphthyl-2′-azo)-naphthalin-6-sulfonsäure → 1-Amino-3-methylbenzol | braun |
| 9 | 1-Amino-4-(2′,5′-disulfophenylazo)-naphthalin-6-sulfonsäure → 1-Amino-2,5-dimethylbenzol | do. |
| 10 | 1-Amino-3-acetylaminobenzol-6-sulfonsäure → 1-Äthyl-3-sulfomethyl-4-methyl-6-hydroxy-pyridon-(2)-5-carbonsäureamid (verseift) | gelb |
| 11 | 1-Amino-3-acetylaminobenzol-6-sulfonsäure → 1-Äthyl-3-aminocarbonyl-4-methyl-6-hydroxy-pyridon-(2) (verseift) | do. |
| 12 | 1-Amino-3-acetylaminobenzol-6-sulfonsäure → 1-(2′-Methyl-4′-sulfophenyl)-3-carboxy-pyrazolon-(5) (verseift) | do. |
| 13 | 1-Amino-3-acetylaminobenzol-6-sulfonsäure → 1-(4′,8′-Disulfonaphthyl-[2′])-3-methyl-pyrazolon-(5) (verseift) | do. |
| 14 | 2-Aminonaphthalin-1,5-disulfonsäure → 2-Acetyl-amino-5-hydroxynaphthalin-7-sulfonsäure (verseift) | orange |
| 15 | 2-Aminonaphthalin-3,6,8-trisulfonsäure → 2-Acetylamino-5-hydroxynaphthalin-7-sulfonsäure (verseift) | do. |
| 16 | 2-Aminonaphthalin-1,5,7-trisulfonsäure → 1-Acetylamino-5-hydroxynaphthalin-7-sulfonsäure (verseift) | do. |
| 17 | 1-Amino-4-methoxybenzol-2,5-disulfonsäure → 2-Amino-5-hydroxynaphthalin-7-sulfonsäure | scharlach |
| 18 | 1-Amino-4-methoxybenzol-2-sulfonsäure → 2-Amino-5-hydroxynaphthalin-7-sulfonsäure | do. |
| 19 | 1-Amino-4-methoxybenzol-2-sulfonsäure → 2-Methylamino-5-hydroxynaphthalin-7-sulfonsäure | do. |
| 20 | 1-Aminobenzol-2-sulfonsäure → 1-(4′-Nitrobenzoylamino)-8-hydroxynaphthalin-3,6-disulfonsäure (reduziert) | rot |
| 21 | 1-Amino-3-acetylaminobenzol-6-sulfonsäure → 1-Benzoylamino-8-hydroxy-naphthalin-3,6-disulfonsäure, (verseift) | blaustichig-rot |
| 22 | 1-Amino-3-acetylaminobenzol-6-sulfonsäure → 1-Acetylamino-8-hydroxynaphthalin-3,6-disulfonsäure (verseift) | do. |
| 23 | 1-Amino-3-acetylaminobenzol-6-sulfonsäure → 1-Benzoylamino-8-hydroxy-naphthalin-4,6-disulfonsäure (verseift) | do. |
| 24 | 1-Amino-3-acetylaminobenzol-6-sulfonsäure → 1-Acetylamino-8-hydroxynaphthalin-4,6-disulfonsäure (verseift) | do. |
| 25 | 1-Amino-4-acetylaminobenzol-2-sulfonsäure → saure 2-Amino-8-hydroxynaphthalin-3,6-disulfonsäure, (verseift) | do. |
| 26 | 1-Amino-4-acetylaminobenzol-2-sulfonsäure → 2-Amino-8-hydroxynaphthalin-6-sulfonsäure, (sauer gekuppelt, verseift) | do. |
| 27 | 2-Aminonaphthalin-1,5-disulfonsäure → 1-Amino-8-hydroxynaphthalin-3,6-disulfonsäure | do. |
| 28 | 3-Methoxy-4-amino-6-methylazobenzol-2′,5′-disulfonsäure → 2-Methylamino-5-hydroxy-naphthalin-7-sulfonsäure (entmethylierend gekupfert) | marine-blau |
| 29 | 3-Methoxy-4-amino-6-methylazobenzol-2′,4′-disulfonsäure → 2-Amino-5-hydroxy-naphthalin-1,7-disulfonsäure (entmethylierend gekupfert) | do. |
| 30 | 1-Amino-3-acetylaminobenzol-6-sulfonsäure → 1-Amino-8-hydroxy-2-(4′-sulfophenylazo)-naphthalin-3,6-disulfonsäure (verseift) | |
| 31 | N-(2-Carboxy-4-sulfophenyl)-N′-(2′-hydroxy-3′-amino-5′-sulfophenyl)-ms-phenylformazan (Cu-Komplex) | do. |
| 32 | N-(2-Carboxy-5-sulfophenyl)-N′-(2-hydroxy-3′-amino-5′-sulfophenyl)-ms-phenylformazan (Cu-Komplex) | do. |
| 33 | 1-Amino-3-acetylaminobenzol-6-sulfonsäure → 1-Amino-8-hydroxy-2-(2′,5′-disulfophenylazo)-naphthalin-3,6-disulfonsäure, verseift. | do. |

Tabelle 1 (Fortsetzung)

| Nr. | Chromophor | Farbton auf Baumwolle |
|---|---|---|
| 34 | ½ Aequivalent 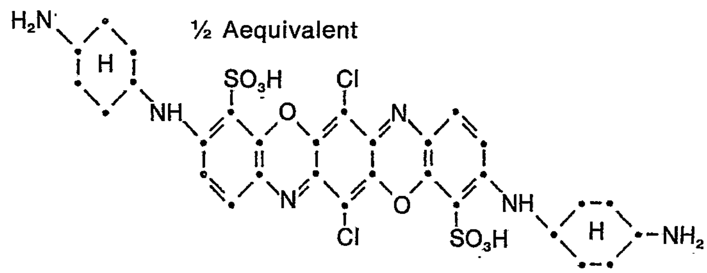 | blau |
| 35 | ½ Aequivalent 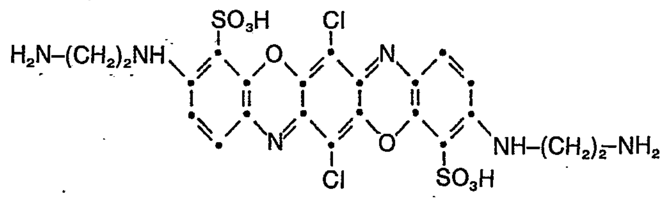 | do. |
| 36 | ½ Aequivalent 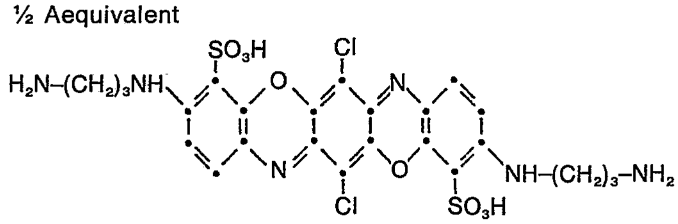 | do. |
| 37 | ½ Aequivalent 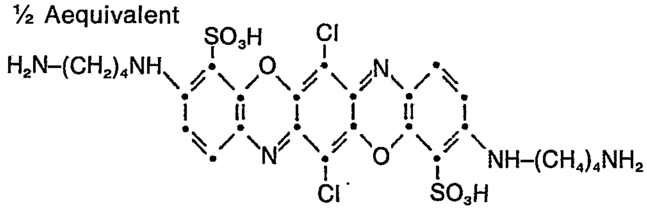 | do. |
| 38 | 0,8 Aequivalent CuPc–(3) 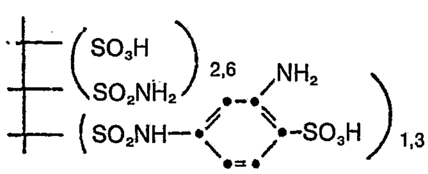 | türkisblau |
| 39 | ½ Aequivalent CuPc–(4) 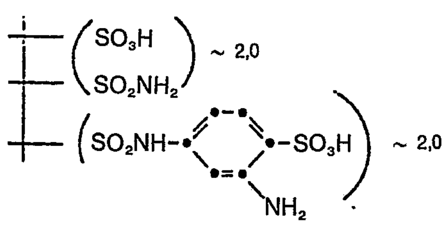 | do. |
| 40 | ½ Äquivalent: 1-Amino-3-acetylaminobenzol-6-sulfonsäure $\xrightarrow{\text{sauer}}$ 1-Amino-8-hydroxy-naphthalin-3,6-disulfonsäure $\xleftarrow{\text{alkalisch}}$ 1-Amino-3-acetylaminobenzol-6-sulfonsäure (beide Acetylgruppen verseift) | blau |
| 41 | ½ Äquivalent: 1-Amino-3-acetylaminobenzol-6-sulfonsäure $\xrightarrow{\text{sauer}}$ 1-Amino-8-hydroxy-naphthalin-3,6-disulfonsäure $\xleftarrow{\text{alkalisch}}$ 1-Amino-4-acetylaminobenzol-2-sulfonsäure (beide Acetylgruppen verseift) | grünstichig blau |

Tabelle 1 (Fortsetzung)

| Nr. | Chromophor | Farbton auf Baumwolle |
|---|---|---|
| 42 | ½ Äquivalent: 1-Amino-3-acetylaminobenzol-6-sulfonsäure $\xrightarrow{\text{sauer}}$ 1-Amino-8-hydroxynaphthalin-3,6-disulfonsäure $\xleftarrow{\text{alkalisch}}$ 1-Amino-4-acetylaminobenzol-2,5-disulfonsäure (beide Acetylgruppen verseift) | grünstichig blau |
| 43 | ½ Äquivalent: 1-Amino-4-acetylaminobenzol-2-sulfonsäure $\xrightarrow{\text{sauer}}$ 1-Amino-8-hydroxynaphthalin-3,6-disulfonsäure $\xleftarrow{\text{alkalisch}}$ 1-Amino-4-acetylaminobenzol-2-sulfonsäure (beide Acetylgruppen verseift) | do. |
| 44 | ½ Äquivalent: 1-Amino-4-acetylaminobenzol-2-sulfonsäure $\xrightarrow{\text{sauer}}$ 1-Amino-8-hydroxynaphthalin-3,6-disulfonsäure $\xleftarrow{\text{alkalisch}}$ 1-Amino-3-acetylaminobenzol-6-sulfonsäure (beide Acetylgruppen verseift) | do. |
| 45 | ½ Äquivalent: 1-Amino-4-acetylaminobenzol-2-sulfonsäure $\xrightarrow{\text{sauer}}$ 1-Amino-8-hydroxynaphthalin-3,6-disulfonsäure $\xleftarrow{\text{alkalisch}}$ 1-Amino-4-acetylaminobenzol-2,5-disulfonsäure (beide Acetylgruppen verseift) | do. |
| 46 | ½ Äquivalent: 1-Amino-4-acetylaminobenzol-2,5-disulfonsäure $\xrightarrow{\text{sauer}}$ 1-Amino-8-hydroxynaphthalin-3,6-disulfonsäure $\xleftarrow{\text{alkalisch}}$ 1-Amino-4-acetylaminobenzol-2,5-disulfonsäure (beide Acetylgruppen verseift) | do. |
| 47 | ½ Äquivalent: 1-Amino-4-acetylaminobenzol-2,5-disulfonsäure $\xrightarrow{\text{sauer}}$ 1-Amino-8-hydroxynaphthalin-3,6-disulfonsäure $\xleftarrow{\text{alkalisch}}$ 1-Amino-3-acetylaminobenzol-6-sulfonsäure (beide Acetylgruppen verseift) | do. |
| 48 | ½ Äquivalent: 1-Amino-4-acetylaminobenzol-2,5-disulfonsäure $\xrightarrow{\text{sauer}}$ 1-Amino-8-hydroxynaphthalin-3,6-disulfonsäure $\xleftarrow{\text{alkalisch}}$ 1-Amino-4-acetylaminobenzol-2-sulfonsäure (beide Acetylgruppen verseift) | do. |
| 49 | ½ Äquivalent: 1-Amino-3-acetylaminobenzol-6-sulfonsäure $\xrightarrow{\text{alkalisch}}$ 1-Amino-8-hydroxynaphthalin-3,6-disulfonsäure (verseift) | blaustichig rot |
| 50 | ½ Äquivalent: 1-Amino-4-acetylaminobenzol-2-sulfonsäure $\xrightarrow{\text{alkalisch}}$ 1-Amino-8-hydroxynaphthalin-3,6-disulfonsäure (verseift) | violett |
| 51 | ½ Äquivalent: 1-Amino-3-acetylaminobenzol-6-sulfonsäure $\xrightarrow{\text{alkalisch}}$ 2-amino-5-hydroxynaphthalin-7-sulfonsäure (verseift) | orange |
| 52 | ½ Äquivalent: 1-Amino-4-acetylaminobenzol-2-sulfonsäure $\xrightarrow{\text{alkalisch}}$ 2-Amino-5-hydroxynaphthalin-7-sulfonsäure (verseift) | do. |
| 53 | ½ Äquivalent: 1-Amino-4-acetylaminobenzol-2,5-disulfonsäure $\xrightarrow{\text{alkalisch}}$ 2-Amino-5-hydroxynaphthalin-7-sulfonsäure (verseift) | do. |
| 54 | ½ Äquivalent: 1-Amino-3-acetylaminobenzol-6-sulfonsäure $\xrightarrow{\text{alkalisch}}$ 3-amino-5-hydroxynaphthalin-7-sulfonsäure (verseift) | do. |
| 55 | ½ Äquivalent: 1-Amino-4-acetylaminobenzol-2,5-disulfonsäure $\xrightarrow{\text{alkalisch}}$ 3-Amino-5-hydroxynaphthalin-7-sulfonsäure (verseift) | do. |

Tabelle 2

| Nr. | Polyaminoverbindung |
|---|---|
| 1 | 1,3-Diaminobenzol-4-sulfonsäure |
| 2 | 1,3-Diaminobenzol |
| 3 | 1,4-Diaminobenzol |
| 4 | 1,5-Diamino-6-methylbenzol-3-sulfonsäure |
| 5 | 1,3-Diamino-6-methylbenzol-4-sulfonsäure |
| 6 | 1,2-Diaminobenzol-4-carbonsäure |
| 7 | 1,3-Diaminobenzol-4-carbonsäure |
| 8 | 1,3,5-Triaminobenzol |
| 9 | Äthylendiamin |
| 10 | n-Propylendiamin |
| 11 | 1,3-Diamino-2-hydroxypropan |
| 12 | 1-Amino-3-methylaminopropan |
| 13 | N-2-Aminoäthyl-piperazin |

Weitere Reaktivfarbstoffe, die nach den in den Beispielen beschriebenen Färbe- beziehungsweise Druckvorschriften wertvolle Färbungen beziehungsweise Drucke in dem in Tabelle 1 Spalte 3 angegebenen Farbton ergeben, werden erhalten, wenn man gemäss den Angaben in der Herstellungsvorschrift die in Tabelle 1 Spalte 2 angegebenen aminogruppenhaltigen Chromophore zuerst mit 2,4,6-Trifluor-1,3,5-triazin und dann mit einer der in Tabelle 2 Spalte 2 angegebenen Polyaminoverbindungen umsetzt.

**Patentansprüche**

1. Verfahren zum Färben oder Bedrucken von textilen Fasermaterialien mit Reaktivfarbstoffen, dadurch gekennzeichnet, dass man Reaktivfarbstoffe der Formel

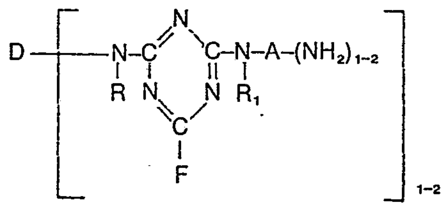

(1),

worin D der Rest eines sulfogruppenhaltigen organischen Farbstoffes, R und $R_1$ unabhängig voneinander Wasserstoff oder gegebenenfalls substituiertes $C_{1-4}$-Alkyl, und A ein gegebenenfalls substituierter aliphatischer oder aromatischer Rest ist, verwendet, und die Farbstoffe in Gegenwart eines alkalischen, säurebindenden Mittels auf den Fasermaterialien fixiert.

2. Verfahren gemäss Anspruch 1, dadurch gekennzeichnet, dass man Reaktivfarbstoffe der Formel (1), worin D der Rest eines sulfogruppenhaltigen organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe ist, verwendet.

3. Verfahren gemäss Anspruch 2, dadurch gekennzeichnet, dass man Reaktivfarbstoffe, worin D die in Anspruch 2 angegebene Bedeutung hat, R und $R_1$ unabhängig voneinander Wasserstoff, Methyl oder Äthyl, und A gegebenenfalls substituiertes $C_{2-6}$-Alkylen oder gegebenenfalls substituiertes Phenylen oder Naphthylen ist, verwendet.

4. Verfahren gemäss Anspruch 3, dadurch gekennzeichnet, dass man Reaktivfarbstoffe der Formel

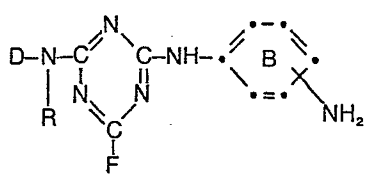

(2),

worin D und R die in Anspruch 3 angegebenen Bedeutungen haben, und der Benzolrest B als weitere Substituenten $C_{1-4}$-Alkyl, $C_{1-4}$-Alkoxy, Halogen, Carboxy, Sulfo oder Amino enthalten kann, verwendet.

5. Verfahren gemäss Anspruch 4, dadurch gekennzeichnet, dass man Reaktivfarbstoffe der Formel

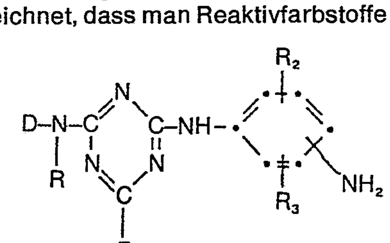

(3),

worin D und R die in Anspruch 4 angegebenen Bedeutungen haben, $R_2$ Wasserstoff oder Methyl, und $R_3$ Wasserstoff, Carboxy, Sulfo oder Amino ist, verwendet.

6. Verfahren gemäss Anspruch 3, dadurch gekennzeichnet, dass man Reaktivfarbstoffe der Formel

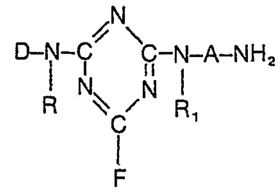

(4),

worin D, R und $R_1$ die in Anspruch 3 angegebenen Bedeutungen haben, und A Äthylen oder Propylen, das durch Hydroxy substituiert sein kann, ist, verwendet.

7. Verfahren gemäss Anspruch 3, dadurch gekennzeichnet, dass man Reaktivfarbstoffe, worin D der Rest eines Mono- oder Disazofarbstoffes ist, und R, $R_1$ und A die in Anspruch 3 angegebenen Bedeutungen haben, verwendet.

8. Verfahren gemäss Anspruch 3, dadurch gekennzeichnet, dass man Reaktivfarbstoffe, worin D der Rest eines Metallkomplexazo- oder Formazanfarbstoffes ist, und R, $R_1$ und A die in Anspruch 3 angegebenen Bedeutungen haben, verwendet.

9. Verfahren gemäss Anspruch 3, dadurch gekennzeichnet, dass man Reaktivfarbstoffe, worin D der Rest eines Anthrachinonfarbstoffes ist, und R, $R_1$ und A die in Anspruch 3 angegebenen Bedeutungen haben, verwendet.

10. Verfahren gemäss Anspruch 8, dadurch gekennzeichnet, dass man Reaktivfarbstoffe, worin D der Rest eines Metallkomplexazofarbstoffes der Benzol- oder Naphthalinreihe ist, und R, $R_1$ und A die in Anspruch 8 angegebenen Bedeutungen haben, verwendet.

11. Verfahren gemäss Anspruch 10, dadurch gekennzeichnet, dass man Reaktivfarbstoffe, worin D der Test eines 1 : 1-Kupferkomplexazofarbstoffes der Benzol- oder Naphthalinreihe ist, und das Kupferatom an jeweils eine metallisierbare Gruppe in ortho-Position zur Azobindung gebunden ist, und R, $R_1$ und A die in Anspruch 10 angegebenen Bedeutungen haben, verwendet.

12. Verfahren gemäss Anspruch 7, dadurch gekennzeichnet, dass man Reaktivfarbstoffe der Formel

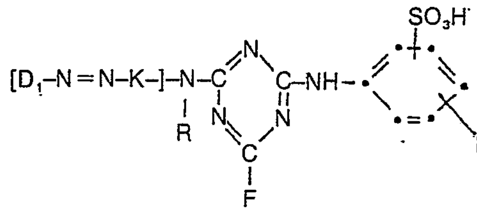

(5),

worin $D_1$ der Rest einer Diazokomponente der Benzol- oder Naphthalinreihe, K der Rest einer Kupplungskomponente der Benzol- oder Naphthalinreihe oder der heterocyclischen Reihe, und R Wasserstoff oder gegebenenfalls substituiertes $C_{1-4}$-Alkyl ist, und der Reaktivrest an die Diazokomponente oder an die Kupplungskomponente gebunden ist, verwendet.

13. Verfahren gemäss Anspruch 12, dadurch gekennzeichnet, dass man Reaktivfarbstoffe der Formel (5), worin R Wasserstoff, Methyl oder Äthyl ist, verwendet.

14. Verfahren gemäss Anspruch 1, zum Färben von Cellulosefasern.

15. Verfahren gemäss Anspruch 14, dadurch gekennzeichnet, dass man nach der Auszieh-, Kaltverweil- oder Pad-steam-Methode färbt.

16. Das nach dem Verfahren gemäss Anspruch 1 gefärbte oder bedruckte textile Fasermaterial.

**Claims**

1. A process for dyeing or printing textile fiber materials with reactive dyes, which comprises using reactive dyes of the formula

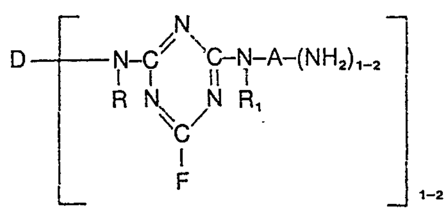 (1),

in which D is the radical of a sulfo-containing organic dye, R and $R_1$ independently of each other are hydrogen or substituted or unsubstituted $C_{1-4}$-alkyl, and A ist a substituted or unsubstituted aliphatic or aromatic radical, and fixing the dyes to the fibre materials, in the presence of an alkaline acid acceptor.

2. A process according to claim 1, which comprises the use of reactive dyes of the formula (1) in which D is the radical of a sulfo-containing organic dye of the monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarboximide series.

3. A process according to claim 2, which comprises the use of reactive dyes in which D is as defined in claim 2, R and $R_1$ independently of each other are hydrogen, methyl or ethyl, and A is substituted or unsubstituted $C_{2-6}$-alkylene or substituted or unsubstituted phenylene or naphthylene.

4. A process according to claim 3, which comprises the use of reactive dyes of the formula

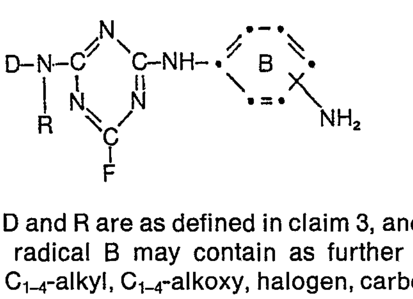 (2),

in which D and R are as defined in claim 3, and the benzene radical B may contain as further substituents $C_{1-4}$-alkyl, $C_{1-4}$-alkoxy, halogen, carboxyl, sulfo or amino.

5. A process according to claim 4, which comprises the use of reactive dyes of the formula

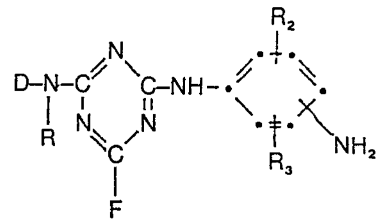 (3),

in which D and R are as defined in claim 4, $R_2$ is hydrogen or methyl, and $R_3$ is hydrogen, carboxyl, sulfo or amino.

6. A process according to claim 3, which comprises the use of reactive dyes of the formula

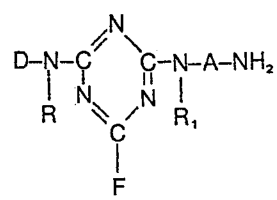 (4),

in which D, R and $R_1$ are as defined in claim 3, and a is ethylene or propylene which can be substituted by hydroxyl.

7. A process according to claim 3, which comprises the use of reactive dyes in which D is the radical of a monoazo or disazo dye, and R, $R_1$ and A are as defined in claim 3.

8. A process according to claim 3, which comprises the use of reactive dyes in which D is the radical of a metal complex azo or formazan dye, and R, $R_1$ and A are as defined in claim 3.

9. A process according to claim 3, which comprises the use of reactive dyes in which D is the radical of an anthraquinone dye, and R, $R_1$ and A are as defined in claim 3.

10. A process according to claim 8, which comprises the use of reactive dyes in which D is the radical of a metal complex azo dye of the benzene or naphthalene series, and R, $R_1$ and A are as defined in claim 8.

11. A process according to claim 10, which comprises the use of reactive dyes in which D is the radical of a 1 : 1 copper complex azo dye of the benzene or naphthalene series, and the copper atom is bonded on either side to a metallizable group in ortho-position relative to the azo bond, and R, $R_1$ and A are as defined in claim 10.

12. A process according to claim 7, which comprises the use of reactive dyes of the formula

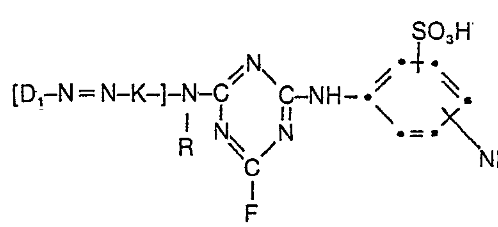 (5),

in which $D_1$ is the radical of a diazo component of the benzene or naphthalene series, K is the radical of a coupling component of the benzene or naphthalene series or of the heterocyclic series, and R is hydrogen or substituted or unsubstituted

$C_{1-4}$-alkyl, and the reactive radical is bonded to the diazo component or to the coupling component.

13. A process according to claim 12, which comprises the use of reactive dyes of the formula (5) in which R is hydrogen, methyl or ethyl.

14. A process according to claim 1, for dyeing cellulose fibers.

15. A process according to claim 14, wherein dyeing is carried out by the exhaust, cold pad-batch or pad-steam method.

16. The textile fiber material dyed or printed by a process according to claim 1.

**Revendications**

1. Procédé de teinture ou d'impression de matières fibreuses textiles avec des colorant réactifs, caractérisé en ce qu'on utilise des colorants réactifs de formule

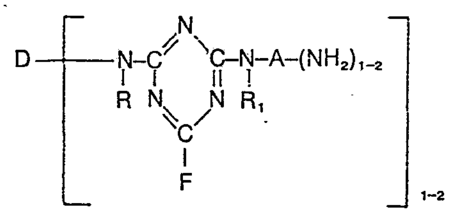
(1),

dans laquelle D est le résidu d'un colorant organique contenant des groupes sulfo, R et $R_1$, indépendamment l'un de l'autre, sont chacun un hydrogène ou un radical alkyle en $C_{1-4}$ éventuellement substitué, et A est un radical aliphatique ou aromatique éventuellement substitué, et qu'on fixe les colorants sur les matières fibreuses en présence d'un agent alcalin fixant les acides.

2. Procédé selon la revendication 1, caractérisé en ce qu'on utilise des colorants réactifs de formule (1) dans laquelle D est le résidu d'un colorant organique contenant des groupes sulfo de la série des colorants mono- ou polyazoïques, azoïques à complexe métallifère, anthraquinones, phtalocyanines, formazans, azométhines, dioxazines, phénazines, stilbènes, triphénylméthanes, xanthènes, thioxanthones, nitroaryles, naphtoquinones, pyrènequinones ou pérylènetétracarbonimides.

3. Procédé selon la revendication 2, caractérisé en ce qu'on utilise des colorants réactifs dans lesquels D a la signification donnée dans la revendication 2, R et $R_1$, indépendamment l'un de l'autre, sont chacun un hydrogène ou un radical méthyle ou éthyle, et A est un radical alkylène en $C_{2-6}$ éventuellement substitué ou phénylène ou naphtylène, éventuellement substitué.

4. Procédé selon la revendication 3, caractérisé en ce qu'on utilise des colorants réactifs de formule

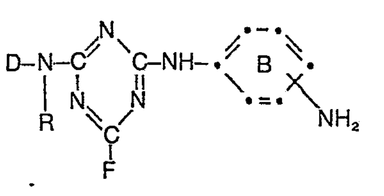
(2),

dans laquelle D et R ont les significations données dans la revendication 3, et le radical benzène B peut contenir comme substituants supplémentaires des radicaux alkyle en $C_{1-4}$, alcoxy en $C_{1-4}$, ou les radicaux halogèno, carboxy, sulfo ou amino.

5. Procédé selon la revendication 4, caractérisé en ce qu'on utilise des colorants réactifs de formule

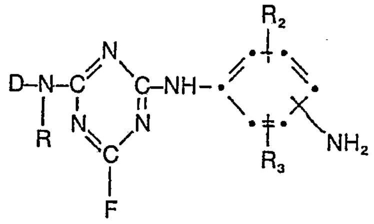
(3),

dans laquelle D et R ont les significations données dans la revendication 4, $R_2$ est un hydrogène ou le radical méthyle, et $R_3$ est un hydrogène ou le radical carboxy, sulfo ou amino.

6. Procédé selon la revendication 3, caractérisé en ce qu'on utilise des colorants réactifs de formule

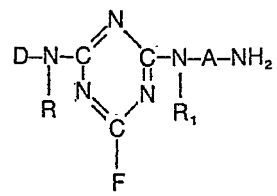
(4),

dans laquelle D, R et $R_1$ ont les significations données dans la revendication 3, et A est le radical éthylène ou propylène qui peut être substitué par un radical hydroxy.

7. Procédé selon la revendication 3, caractérisé en ce qu'on utilise des colorants réactifs dans lesquels D est le résidu d'un colorant mono- ou disazoïque, et R, $R_1$ et A ont les significations données dans la revendication 3.

8. Procédé selon la revendication 3, caractérisé en ce qu'on utilise des colorants réactifs dans lesquels D est le résidu d'un colorant azoïque à complexe métallifère ou formazan, et R, $R_1$ et A ont les significations données dans la revendication 3.

9. Procédé selon la revendication 3, caractérisé en ce qu'on utilise des colorants réactifs dans lesquels D est le résidu d'un colorant anthraquinone, et R, $R_1$ et A ont les significations données dans la revendication 3.

10. Procédé selon la revendication 8, caractérisé en ce qu'on utilise des colorants réactifs dans lesquels D est le résidu d'un colorant azoïque à complexe métallifère de la série du benzène ou du naphtalène, et R, $R_1$ et A ont les significations données dans la revendication 8.

11. Procédé selon la revendication 10, caractérisé en ce qu'on utilise des colorants réactifs dans lesquels D est le résidu d'un colorant azoïque à complexe de cuivre 1 : 1 de la série du benzène ou du naphtalène, et l'atome de cuivre est fixé à des groupes métallables en position ortho par rapport à la liaison azoïque, et R, $R_1$ et A ont les significations données dans la revendication 10.

12. Procédé selon la revendication 7, caractérisé en ce qu'on utilise des colorants réactifs de formule

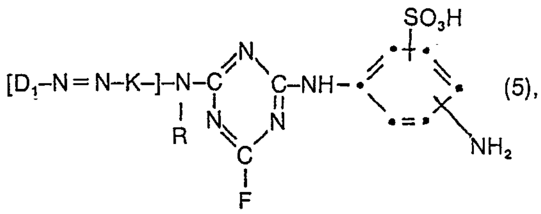 (5),

dans laquelle $D_1$ est le résidu d'un composant diazo de la série du benzène ou du naphtalène, K est le résidu d'un composant de copulation de la série du benzène ou du naphtalène, ou de la série hétérocyclique, et R est un hydrogène ou un radical alkyle en $C_{1-4}$ éventuellement substitué, et le radical réactif est fixé au composant diazo ou au composant de copulation.

13. Procédé selon la revendication 12, caractérisé en ce qu'on utilise des colorants réactifs de formule (5), dans laquelle R est un hydrogène ou le radical méthyle ou éthyle.

14. Procédé selon la revendication 1 pour la teinture de fibres cellulosiques.

15. Procédé selon la revendication 14, caractérisé en ce qu'on procède à la teinture par le procédé par épuisement, d'abandon à froid ou de foulardage-vaporisage..

16. Matière fibreuse textile, teinte, ou imprimée par le procédé selon la revendication 1.